# FASCICULE DE BREVET EUROPEEN

(11) **EP 1 989 819 B1**
(45) Date de publication et mention de la délivrance du brevet: **01.02.2012**
(21) Numéro de dépôt: 06847218.2
(22) Date de dépôt: 27.12.2006
(51) Int. Cl.: H04L 9/32

(54) **PROCÉDE DE CERTIFICATION DE CLÉ PUBLIQUE PAR UN PRESTATAIRE NON ACCRÉDITÉ**
VERFAHREN ZUM ZERTIFIZIEREN EINES ÖFFENTLICHEN SCHLÜSSELS DURCH EINEN NICHT ZERTIFIZIERTEN ANBIETER
METHOD FOR CERTIFYING A PUBLIC KEY BY AN UNCERTIFIED PROVIDER

(30) Priorité: 16.02.2006 FR 0650554
(43) Date de publication de la demande: 12.11.2008
(73) Titulaire: Digmedia Interactivite, 93210 Saint Denis (FR)
(72) Inventeur: MAUPERTUIS, Laurent, F-91210 Draveil (FR); POINTCHEVAL, David, F-94320 Thiais (FR); GIQUELLO, Cyrille, F-37100 Tours (FR); STARCK, Bernard, F-92190 Meudon (FR)
(74) Mandataire: Novagraaf Technologies
(86) Numéro de dépôt international: PCT/FR2006/051429
(87) Numéro de publication internationale: WO 2007/093680

(56) Documents cités:
- US-A1- 2003 097 566
- RIEGER B ET AL: "Digital image recording for court-related purposes" SECURITY TECHNOLOGY, 1999. PROCEEDINGS. IEEE 33RD ANNUAL 1999 INTERNATIONAL CARNAHAN CONFERENCE ON MADRID, SPAIN 5-7 OCT. 1999, PISCATAWAY, NJ, USA,IEEE, US, 5 octobre 1999 (1999-10-05), pages 262-279, XP010355733 ISBN: 0-7803-5247-5
- YONG LEE ET AL: "A Lightweight And Secure Wireless Certificate Management Protocol Supporting Mobile Phone" CONSUMER ELECTRONICS, 2006. ICCE '06. 2006 DIGEST OF TECHNICAL PAPERS. INTERNATIONAL CONFERENCE ON LAS VEGAS, NV, USA 07-11 JAN. 2006, PISCATAWAY, NJ, USA,IEEE, 7 janvier 2006 (2006-01-07), pages 103-104, XP010896525 ISBN: 0-7803-9459-3

## Description

La présente invention se rapporte au domaine des procédés de certification des données.

Il est connu de l'état de l'art XP10355733: "Digital image recording for court purposes" une méthode de gestion de PKI: infrastructure de clés publiques comprenant une entité de validation fonctionnant comme prestataire de service en certification.

La certification de données est très utilisée dans la mise en oeuvre de la cryptographie asymétrique. Dans ce type de cryptographie, chaque utilisateur détient deux clés, une clé privée qui doit être gardée-secrète, et une clé publique qui est disponible pour tous les autres utilisateurs, ces deux clés étant mathématiquement liées. Ce mécanisme permet d'échanger des données chiffrées et/ou signées.

On décrit ci-dessous les mécanismes de chiffrement et de signature connus. Dans le cas d'un chiffrement, pour envoyer un message chiffré à Bernard, Alice obtient la clé publique de Bernard et s'en sert pour chiffrer le message. À sa réception, Bernard est en mesure de déchiffrer le message en utilisant sa clé privée. Nul autre que lui n'est en mesure de le faire, puisque si n'importe qui peut accéder à la clé publique de Bernard, nul ne peut en déduire la clé privée qui la complémente.

Dans le cas d'une signature, pour envoyer un message signé, il suffit d'inverser l'ordre des clés : la clé privée devient la *clé de signature*, et la clé publique, celle de *vérification.* Le mécanisme offre alors les assurances suivantes : d'une part, le message ainsi « signé » l'a bel et bien été par la clé privée correspondant à la clé publique utilisée pour la vérification; d'autre part, le message n'a pu être modifié après la signature, sinon la vérification aurait échouée. Ces deux caractéristiques - *identification* de l'auteur, *intégrité* du message signé - fournissent, un équivalent de la signature manuscrite adapté au contexte électronique. Ce procédé conférant, en particulier la qualité de non-répudiation au message ainsi signé.

Toutefois ce mode de partage a une grande lacune puisque rien ne garantit que la clé est bien celle de l'utilisateur à qui elle est associée. En effet, un pirate peut corrompre la clé publique présente dans un annuaire de clés publiques en la remplaçant par sa clé publique. Supposons qu'Oscar, un pirate, désire convaincre Alice qu'elle reçoit des messages signés de Bernard, alors qu'ils sont en fait de sa plume. Il n'aura qu'à substituer sa propre clé publique à celle de Bernard dans l'annuaire, et envoyer ses messages à Alice en prétendant être Bernard. Pour vérifier la signature de ces messages, Alice se procurera la clé publique de Bernard (en fait, celle du pirate) et la vérification étant réussie, sera faussement convaincue de l'origine des messages. De même Bernard pourrait malhonnêtement répudier un message effectivement envoyé, au prétexte qu'un pirate se serait substitué à lui.

Ainsi, le pirate sera en mesure de signer et/ou de déchiffrer tous les messages ayant été chiffrés avec la fausse clé présente dans l'annuaire, à l'aide de sa fausse clé privée et l'utilisateur pourrait ainsi répudier un message sous un faux prétexte.

La distribution des clés publiques est donc un problème de taille. En effet, pour que le chiffrement et la signature fonctionnent, il faut pouvoir être certain de l'identité de la personne reliée à la clé publique. Pour ce faire, on utilise en général un procédé de certification des clés publiques.

Un certificat permet d'associer une clé publique à une entité de type personne ou machine afin d'en assurer la validité. Le certificat est en quelque sorte la carte d'identité de la clé publique, délivré par un organisme appelé autorité de certification (souvent notée CA pour « Certification Authority »). Un certificat d'une autorité associée à un premier élément A et à un second élément B comprend donc au moins une signature du type *sk_{autorité} (A, B),* sk_{autorité} étant la clé privée de l'autorité délivrant le certificat certifiant que l'élément A est bien associé à l'élément B.

L'autorité de certification est chargée de délivrer les certificats, de leur assigner une date de validité (équivalent à la date limite de péremption des produits alimentaires), ainsi que de révoquer éventuellement des certificats avant cette date en cas de compromission de la clé (ou du propriétaire).

Un certificat comprend donc une première partie correspondant à des informations sur le détenteur de la clé publique, ainsi que sur l'autorité délivrant le certificat, et une seconde partie correspondant à la signature de l'autorité de certification, avec par exemple un format de type :

### Informations :

- nom de l'autorité de certification : Me Dupont Huissier de justice.
- nom du propriétaire de la clé publique : M. Durand
- clé publique : 1a:5b:3c:a5:32:4c:d6

### Signature :

- d9:6d:4a:2g:1b:3c:F2

La combinaison d'éléments matériels, logiciels, et procéduraux qui permet d'effectuer l'ensemble des opérations sous-jacentes à la réalisation de la signature (et du chiffrement) cryptographique est désignée sous le nom d'*infrastructure à clés publiques* (ICP ou PKI), c'est-à-dire :
- Génération de clés cryptographiques : Il faut produire les paires de clés cryptographiques, de façon hautement sécuritaire ;
- Enregistrement des utilisateurs : Il faut que l'autorité de certification vérifie l'identité de chacun des utilisateurs, par exemple par une présentation en personne de pièces d'identités ;
- Certification des clés publiques : Une fois l'identité des utilisateurs confirmée, l'autorité de certification doit produire le certificat et le signer avec sa clé privée ;
- Génération des clés privées des utilisateurs : Un procédé fiable doit permettre de générer les clés de l'utilisateur.
- Service d'annuaire : Le certificat doit être placé au sein d'un annuaire, de façon à permettre à d'autres utilisateurs d'y accéder et de vérifier les signatures ;
- Révocation des certificats compromis ou périmés : Un service doit permettre de révoquer les certificats lorsqu'ils sont expirés, ou lorsqu'une clé privée a été compromise. Ainsi, à partir du moment où le certificat d'une clé publique est révoqué, il ne peut être utilisé pour vérifier les messages signés à l'aide de la clé privée associée;
- Archivage : Il faut conserver l'ensemble des certificats qui permettent la vérification, les listes de révocation, etc., de façon à pouvoir effectuer la vérification ultérieurement ;
- Horodatage : les certificats et les signatures doivent faire l'objet d'un datage sûr.

Une organisation désirant déployer une PKI peut déléguer l'ensemble de ces fonctions à un prestataire, ou au contraire, les réaliser toutes ou en partie.

Cette liste permet cependant de constater la complexité des infrastructures nécessaires au déploiement de la signature cryptographique.

De façon connue en soi, la structure d'un certificat est normalisée par le standard X.509.

L'ensemble des informations (informations + clé publique du demandeur) est signé par l'autorité de certification. Cela signifie qu'une fonction de hachage réalise une empreinte de ces informations, puis ce condensé est signé à l'aide de la clé privée de l'autorité de certification; la clé publique de l'autorité de certification ayant été préalablement largement diffusée afin de permettre aux utilisateurs de vérifier la signature avec la clé publique de l'autorité de certification.

Lorsqu'un utilisateur désire communiquer avec une autre personne, il lui suffit de se procurer le certificat du destinataire. Ce certificat contient le nom du destinataire, ainsi que sa clé publique et est signé par l'autorité de certification. Il est donc possible de vérifier la validité du message en appliquant d'une part la fonction de hachage aux informations contenues dans le certificat, en vérifiant d'autre part la signature de l'autorité avec la clé publique de cette dernière, par rapport à la valeur hachée.

Certaines autorités, dites autorités de certification, sont habilitées à établir une certification des clés publiques. Ceci est par exemple réalisé par un huissier, qui certifie la correspondance entre une clé publique et un utilisateur par une signature électronique n'appartenant qu'à lui.

Toutefois, cette étape de certification est lourde car elle suppose que l'huissier doive vérifier l'identité de l'utilisateur avant de signer sa clé publique, par exemple par un contrôle d'identité. Cette autorité est donc très sollicitée, ce qui peut être incompatible avec sa grande responsabilité.

Un premier but de la présente invention est donc de pouvoir garantir la certification d'une clé publique d'un utilisateur en réduisant la sollicitation des autorités de certification des clés.

Une solution connue à cet inconvénient est de laisser cette autorité de certification générer à la fois la clé publique et la clé privée de l'utilisateur, de certifier sa clé publique, et de lui remettre l'ensemble de ces clés ainsi que le certificat. Cette solution possède cependant l'inconvénient que l'autorité connaît alors la clé secrète de l'utilisateur, et pourra donc signer à sa place et en son nom, ou bien déchiffrer ses communications. Dans ces conditions le message ou la transaction perd la qualité de non-répudiation.

Un autre but de la présente invention est donc de pouvoir garantir la certification d'une clé publique d'un utilisateur en réduisant la sollicitation des autorités compétents de certification des clés, tout en évitant l'inconvénient de la génération de la clé publique et de la clé secrète de l'utilisateur par l'autorité compétente.

Par ailleurs, il est courant, pour des raisons pratiques, que des prestataires techniques différents des autorités de certifications participent au processus de certification (Prestataire de service en certification électronique - PSCE). Pour maintenir la qualification dudit certificat, il est nécessaire que le prestataire soit accrédité par l'autorité de certification afin de bénéficier de la même qualité de confiance que ladite autorité de certification. Dans les autres cas, la confiance qui est accordée à un tel prestataire non accrédité est inférieure à celle accordée à l'autorité de certification. Elle peut être limitée voire nulle.

Un tel prestataire est donc capable, dans les systèmes connus, de générer des certificats, et donc de signer par sa signature privée une clé publique et un identifiant d'utilisateur et d'utiliser ensuite ce certificat à l'insu de l'utilisateur.

La publication « Digital image recording for court-relatd purposes » de Rieger et al., dans Security Technology, 1999, décrit par exemple une infrastructure de gestion de clés publiques d'utilisateurs comprenant une entité de certification et une entité de validation. Cette entité de validation est un prestataire de service en certification électronique, et génère des certificats de clé publique pour les clés publiques des utilisateurs.

Ceci pose par exemple des problèmes dans le cadre de la signature numérique de contrats et de transactions.

Un inconvénient de la présence d'un tiers non accrédité et pouvant délivrer des certificats est donc la possibilité pour ce tiers d'utiliser ces certificats de manière frauduleuse. Dans ces conditions, la chaîne de certification ne garantit pas suffisamment l'intégrité et la non-répudiation des messages signés. Il n'y a donc pas dans ce schéma de véritable équivalence entre la signature numérique et la signature manuscrite.

Un autre but de la présente invention est donc de permettre la génération par un tiers prestataire, d'un certificat garantissant la correspondance entre une clé publique et un utilisateur, et sans que ce certificat ne soit utilisable par ce tiers sans qu'il puisse être confondu. Ces prestataires seront appelés « entité de validation ».

Il est par ailleurs important que le certificat délivré par le tiers prestataire soit valable au sens où il reflète bien, notamment juridiquement, la correspondance entre une clé publique et un utilisateur. Pour cela, il est nécessaire que le certificat ne soit délivré à l'utilisateur qu'en fonction d'une donnée dépendant non pas uniquement de lui, car ce tiers n'est pas accrédité, mais de l'autorité de certification.

Un autre but de la présente invention est donc de faire dépendre la délivrance d'un certificat par un tiers prestataire non accrédité d'une donnée certifiée par l'autorité de certification, connue d'un utilisateur, mais pas dudit tiers.

Au moins un de ces buts est atteint selon la présente invention par un procédé pour la gestion d'une clé publique d'un utilisateur, ledit utilisateur possédant un identifiant unique, caractérisé en ce qu'il comprend :
o une étape de certification consistant à :
   - générer au niveau d'une entité de certification au moins un mot de passe;
   - transmettre de ladite autorité de certification audit utilisateur, au moins une donnée secrète associée audit au moins un mot de passe ;
   - déduire au niveau dudit utilisateur, ledit au moins un mot de passe, de ladite au moins une donnée secrète ;
   - générer, au niveau de ladite entité de certification, à partir dudit au moins un mot de passe, au moins un mot de passe dérivé, ledit au moins un mot de passe dérivé dérivant de façon unidirectionnelle dudit au moins un mot de passe par une fonction unidirectionnelle;
o une étape d'échange consistant à :
   - transmettre de ladite entité de certification, vers une entité de validation, au moins un certificat de ladite entité de certification associé audit identifiant unique dudit utilisateur et audit moins un mot de passe dérivé;
o une étape de demande de validation consistant à :
   - générer, au niveau dudit utilisateur, une clé secrète associée à une clé publique;
   - transmettre, dudit utilisateur vers ladite entité de validation, ladite clé publique et ledit identifiant unique;
   - transmettre, dudit utilisateur vers ladite entité de validation, une valeur de test;
o une étape de validation consistant à :
   - En cas de correspondance au niveau de ladite entité de validation, entre une dérivée de ladite valeur de test par ladite fonction unidirectionnelle et un mot de passe dérivé validé parmi ledit au moins un mot de passe dérivé, transmettre audit utilisateur un certificat de validation de l'entité de validation associé au moins audit identifiant dudit utilisateur et à ladite clé publique.

De la sorte, en certifiant ledit mot de passe à l'utilisateur, l'autorité de certification garantit la correspondance entre ce mot de passe et un utilisateur déterminé. Dans le procédé selon l'invention, c'est la seule intervention de l'autorité de certification, et en particulier, celle-ci n'a plus à certifier les clés publiques générées par l'utilisateur, surtout dans le cas de la génération de plusieurs jeux de clés publiques.

En effet, selon l'invention, cette certification, ou validation de la correspondance entre une clé publique et un utilisateur, est réalisée par l'entité de validation un prestataire distinct de l'autorité de certification, par l'intermédiaire de l'étape de validation. Ledit mot de passe de l'utilisateur est donc vérifiable par l'entité de validation, mais sans que cette dernière ne le connaisse.

Ainsi, dans le procédé selon l'invention, l'entité de validation garantit une réelle certification de la clé publique de l'utilisateur, mais sans toutefois pouvoir générer des certificats frauduleux, sauf à réutiliser le mot de passe qu'il vient d'apprendre, éventuellement avant d'avoir fini le processus de certification avec l'utilisateur, afin de générer lui-même un certificat au nom de l'utilisateur.

Il est donc avantageux que le certificat émis par l'utilisateur intègre une information générée et certifiée par l'autorité de certification, et connue de lui seul afin que l'autorité de validation n'ait aucun intérêt à interrompre le processus de certification.

En particulier, il est avantageux que le certificat émis par l'utilisateur intègre une information qui n'ait pas été connue de l'entité de validation qui a émis le certificat garantissant la correspondance entre la clé publique de l'utilisateur et l'utilisateur.

Pour ce faire, dans le procédé susmentionné, ladite étape de certification comprend en outre une étape consistant à :
- déduire au niveau dudit utilisateur, au moins un mot de reconnaissance de ladite au moins une données secrète, chacun desdits au moins un mot de passe dérivant de façon unidirectionnelle de chacun desdits au moins un mot de reconnaissance;
   et ledit procédé comprend également :
   o une étape de transaction certifiée vers une entité de transaction, comprenant des étapes consistant à :
- transmettre dudit utilisateur vers ladite entité de transaction, un certificat de transaction comprenant au moins ledit certificat de validation et un desdits au moins un mot de reconnaissance.

De la sorte, le certificat transmis à l'entité de transaction comprend un mot de reconnaissance dont est dérivé de façon unidirectionnelle le mot de passe qui a été transmis par l'utilisateur à l'entité de validation. L'entité de validation ne connaît donc pas, et n'a aucun moyen de connaître la valeur de ce mot de reconnaissance, avant l'utilisation effective du certificat.

Toutefois, de ce mot de reconnaissance dérive le mot de passe, ainsi que le mot de passe dérivé certifié par l'autorité. Ainsi, ce mot de reconnaissance a donc été certifié par l'entité de validation lorsqu'elle a émis le certificat représentatif de la correspondance entre le mot de passe et ledit utilisateur.

Ainsi, l'entité de validation ne peut générer un certificat de transaction valable en tirant partie des informations reçues lors de l'étape de validation, puisque ce certificat de transaction dépend d'une valeur qui lui est inconnue, en l'espèce, un mot de reconnaissance.

Par ailleurs, dans le procédé susmentionné, une fois que l'utilisateur a transmis son certificat de transaction, il dévoile, la valeur du mot de reconnaissance, notamment à l'entité de validation. Il serait donc avantageux de faire une distinction entre la réutilisation de ce mot de reconnaissance par l'utilisateur pour retirer un deuxième certificat (ou renouveler une demande qui aurait été interrompue) et l'utilisation de ce mot de reconnaissance par l'entité de validation pour générer un certificat frauduleux.

L'entité de validation a donc tout intérêt à mettre en évidence une telle distinction pour ne pas se faire accuser de fraude à tort.

Pour ce faire, dans le procédé susmentionné, chacun desdits au moins un mot de reconnaissance est associé à un index unique, et chacun desdits au moins un mot de passe dérivant de façon unidirectionnelle de chacun desdits au moins un mot de reconnaissance est associé à l'index dudit mot de reconnaissance dont il dérive;
o ladite étape de demande de validation comprend, suite à la transmission dudit utilisateur vers ladite entité de validation de ladite clé publique, une étape consistant à :
   - stocker dans des moyens de stockage, au niveau de ladite entité de validation un identifiant numérique de comptage;
   - transmettre de ladite entité de validation vers ledit
o ladite étape de validation consistant à :
   - En cas de correspondance au niveau de ladite entité de validation, entre la dérivée de ladite valeur de test par ladite fonction unidirectionnelle et un mot de passe dérivé validé dont l'index correspond audit identifiant numérique de comptage parmi ledit au moins un mot de passe dérivé, transmettre audit utilisateur un certificat de validation de l'entité de validation associé au moins audit identifiant dudit utilisateur, à ladite clé publique, audit mot de passe dérivé validé, et audit identifiant numérique de comptage ;
   - Modifier ledit identifiant numérique de comptage dans lesdits moyens de stockage de ladite entité de validation;
o ladite étape de transaction certifiée vers une entité de transaction, comprenant des étapes consistant à :
   - transmettre dudit utilisateur vers ladite entité de transaction, un certificat de transaction comprenant au moins ledit certificat de validation, ledit mot de reconnaissance dont l'index est celui dudit mot de passe dérivé validé, et l'index dudit mot de reconnaissance.

De la sorte, si l'entité de validation modifie bien son identifiant numérique de comptage, ou compteur, à chaque fois qu'elle valide la correspondance entre une clé publique et un utilisateur, les certificats émis par l'entité de validation pour un même utilisateur comprennent tous un compteur différent.

Ainsi, si l'entité de validation a correctement mis en oeuvre le procédé ci-dessus, si deux certificats ont été transmis avec le même index ceci signifie que c'est bien le prestataire qui est en faute. En effet, si l'utilisateur avait voulu retirer un deuxième certificat, ou renouveler une demande, l'index correspondant à l'identifiant numérique de comptage dans le certificat émis par l'entité de validation aurait alors été différent.

Afin de faciliter la mise en oeuvre du procédé, on peut faire en sorte que les index de chacun desdits mots de reconnaissance dérivés soient tous distincts et ordonnés. Dans ce cas, la modification dudit identifiant numérique de comptage dans lesdits moyens de stockage de ladite entité de validation est une incrémentation.

Par ailleurs, selon un mode de réalisation particulier de l'invention ladite au moins une donnée secrète correspond à un secret, chacun desdits au moins un mot de passe dérivant de façon unidirectionnelle dudit secret.

Selon ce mode de réalisation, un unique mot secret est transmis à l'utilisateur, et les calculs du mot de passe sont réalisés par un calculateur de l'utilisateur. De la sorte, la taille du secret transmis à l'utilisateur est courte, par exemple 12 caractères, selon les besoins en sécurité.

Toujours dans ce mode de réalisation, les calculs du mot de reconnaissance peuvent être réalisés au niveau du poste de l'utilisateur. Dans ce cas, ladite étape de certification comprend des étapes consistant à :
- transmettre de ladite autorité de certification audit utilisateur, ledit secret;
- calculer, au niveau dudit utilisateur, au moins un mot de reconnaissance, chacun desdits au moins un mot de reconnaissance dérivant de façon unidirectionnelle dudit secret;
- calculer, au niveau dudit utilisateur, ledit au moins un mot de passe, chacun desdits au moins un mot de passe dérivant de façon unidirectionnelle de chacun desdits au moins un mot de reconnaissance.

Il est également possible de combiner l'utilisation d'un identifiant numérique de comptage et du calcul au niveau du poste utilisateur. Dans ce cas, ladite étape de certification comprend des étapes consistant à :
- transmettre de ladite autorité de certification audit utilisateur, ledit secret;
- calculer, au niveau dudit utilisateur, au moins un mot de reconnaissance, chacun desdits au moins un mot de reconnaissance étant associé à un index unique dérivant de façon unidirectionnelle dudit secret;
- calculer, au niveau dudit utilisateur, ledit au moins un mot de passe, chacun desdits au moins un mot de passe dérivant de façon unidirectionnelle de chacun desdits au moins un mot de reconnaissance et étant associé audit index dudit mot de reconnaissance dont il dérive
   o ladite étape de demande de validation comprend, suite à la transmission dudit utilisateur vers ladite entité de validation de ladite clé publique, une étape consistant à :
- stocker dans des moyens de stockage, au niveau de ladite entité de validation un identifiant numérique de comptage;
- transmettre de ladite entité de validation vers ledit utilisateur, ledit identifiant numérique de comptage;
   o ladite étape de validation consistant à :
- En cas de correspondance au niveau de ladite entité de validation, entre la dérivée de ladite valeur de test par ladite fonction unidirectionnelle et un mot de passe dérivé validé dont l'index correspond audit identifiant numérique de comptage parmi ledit au moins un mot de passe dérivé, transmettre audit utilisateur un certificat de validation de l'entité de validation associé au moins audit identifiant dudit utilisateur, à ladite clé publique, audit mot de passe dérivé validé, et audit identifiant numérique de comptage;
- Modifier ledit identifiant numérique de comptage dans lesdits moyens de stockage de ladite entité de validation ;
   o ladite étape de transaction certifiée vers une entité de transaction, comprenant des étapes consistant à :
- transmettre dudit utilisateur vers ladite entité de transaction, un certificat de transaction comprenant au moins ledit certificat de validation, ledit mot de reconnaissance dont l'index est celui dudit mot de passe dérivé validé, et l'index dudit mot de reconnaissance.

Par ailleurs, il se peut également que l'accréditation de l'autorité de certification puisse être remise en cause. Dans ce cas, il est avantageux qu'il existe dans le procédé selon l'invention, un secret partagé entre l'utilisateur et l'entité de certification, mais inconnu de l'entité de certification.

Pour ce faire; dans le procédé tel que précédemment décrit, ladite étape de demande de validation comprend une première sous-étape de transmission de ladite entité de validation vers ledit utilisateur, d'un second mot de passe; et une seconde sous-étape de transmission dudit utilisateur vers ladite entité de validation d'une seconde valeur de test, ladite étape de validation n'étant réalisée qu'en cas de correspondance entre ledit second mot de passe et ladite seconde valeur de test.

De la sorte, on garantit que le certificat de validation ne sera délivré qu'à l'utilisateur connaissant le second mot de passe, et donc pas à l'autorité de certification si elle désirait frauder.

L'invention sera mieux comprise à l'aide de la description détaillée ci-dessous et des figures annexées dans lesquelles :
- la figure 1 représente un schéma général des échanges entre les différentes entités intervenant dans le cadre de la présente invention ;
- la figure 2 représente un schéma détaillé des échanges entre un utilisateur et une entité de certification selon un mode de réalisation de l'invention ;
- la figure 3 représente un schéma détaillé des échanges entre un utilisateur et une entité de validation selon un mode de réalisation de l'invention ;

On définit tout d'abord des notations aux fins de la présente demande. On définit un algorithme de signature *Ssk(m)* qui retourne une signature σ sur le message m par une clé privée *sk*. On définit également un algorithme de vérification *Vvk(m ;* σ*)* qui vérifie la validité de la signature σ relativement au message m et à la clé publique *vk.*

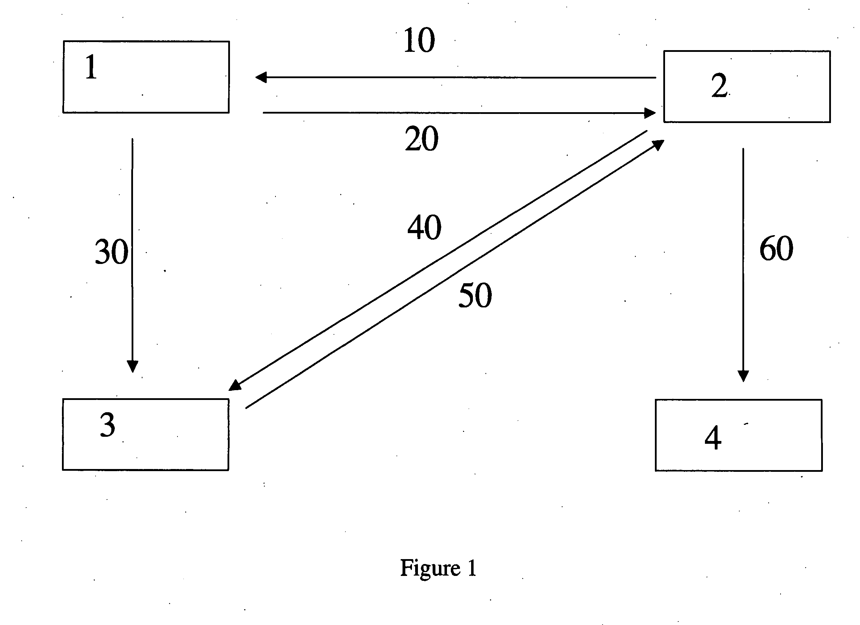

Comme illustré figure 1, la présente invention est basée sur des échanges entre différentes entités pour un usage dans un cryptosystème asymétrique. Elle fait intervenir un utilisateur 2 souhaitant obtenir un certificat sur une clé publique qu'il a générée lui-même, une entité de certification 1 qui est a priori la seule personne de confiance, capable de certifier des données. De façon classique, cette entité de certification 1 est par exemple un huissier. Elle fait également intervenir une entité de validation 3, également appelée par la suite prestataire, qui possède une clé de certification, mais en qui on n'a pas entièrement confiance pour délivrer seule des certificats. Cette entité de validation 3 réalise la plus grande partie des calculs, des stockages, et des interactions avec l'utilisateur. Elle fait également intervenir une entité de transaction 4 au niveau de laquelle l'utilisateur souhaite réaliser une transaction certifiée.

Par la suite, la clé privée de l'entité de certification est notée *skₐ*, et sa clé publique *vkₐ*. La clé privée de l'entité de validation est notée skp et sa clé publique *vkₚ*.

Selon l'invention, chaque utilisateur 2 possède un identifiant public et unique *login.* L'autorité de certification 1 génère 20 un secret sec qui est transmis à l'utilisateur 2 sur présentation 10 de l'identifiant login de l'utilisateur 2.

L'autorité de certification transmet également 30 au prestataire des moyens de vérification de la validité du secret sec de l'utilisateur. Ces moyens de vérification seront décrits plus en détail par la suite.

Afin de faire certifier une clé publique, l'utilisateur transmet 40 cette clé publique à l'entité de validation. En réponse, et si l'entité de validation conclut que la clé publique est bien associée à l'utilisateur 2, elle transmet 50, un certificat associant cette clé publique à cet utilisateur.

L'utilisateur peut ensuite dans une étape 60, réaliser une transaction vers une entité de transaction en utilisant des données du certificat qu'il a reçu de l'entité de vérification.

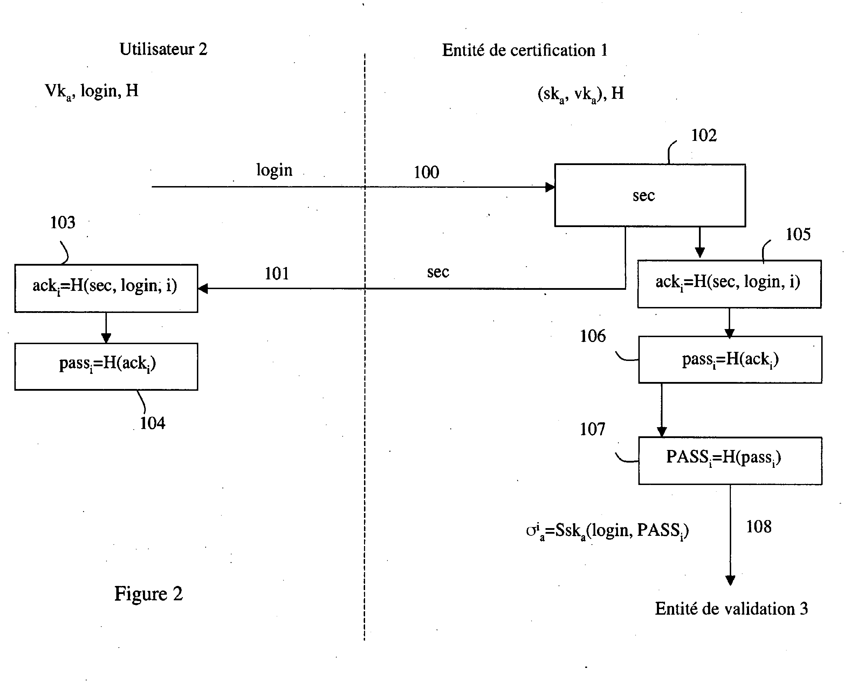

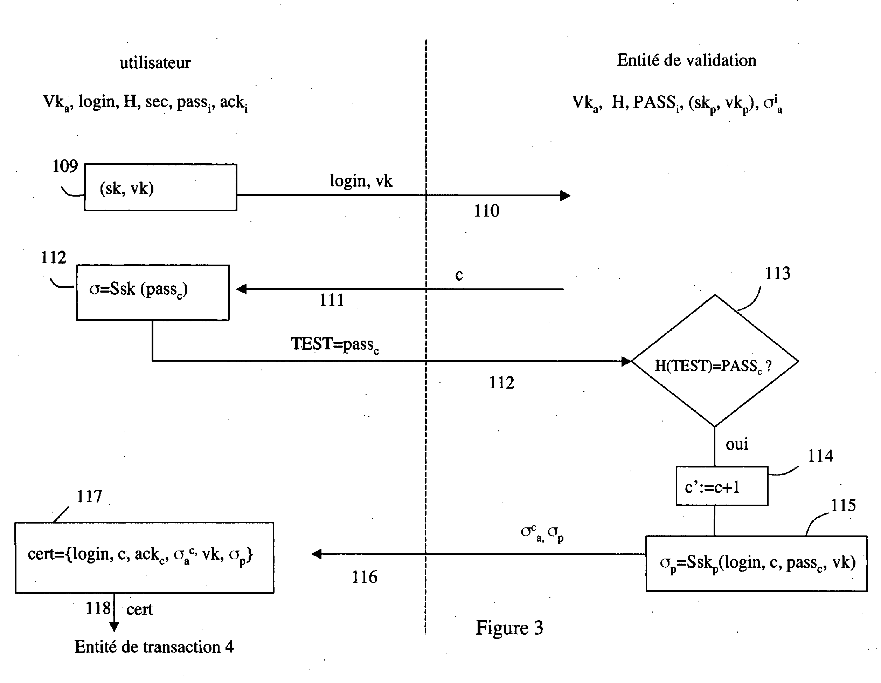

On décrit maintenant plus en détail les échanges entre les différentes entités décrites ci-dessus en référence aux figures 2 et 3.

On définit d'abord des dérivées du secret sec. Dans le domaine de la cryptographie; cette dérivée correspond à l'application d'une fonction unidirectionnelle (« one-way» en langue anglaise) au sens où, si H est unidirectionnelle et si l'on possède seulement le résultat H(x), il est très difficile voire impossible de retrouver x dans un temps raisonnable. Un exemple d'une telle fonction unidirectionnelle est la fonction de hachage SHA-1 connue de l'homme du métier.

On définit donc plusieurs dérivées du secret sec, d'abord sous la forme de mots de reconnaissance ackᵢ, de mots de passe passᵢ et de mots de vérification PASSᵢ, avec par exemple :
Pour *i* = 1, ... , *k*,
   - *ackᵢ* = *H(sec, login, i)*
   - pass*ᵢ* = *H*(ack*ᵢ*)
   - *PASSᵢ* = *H(passᵢ)*

Selon cette définition, on note que ackᵢ est différent de *ackⱼ* pour i différent de j, et que par conséquent, passᵢ (respectivement *PASSᵢ*) est différent de *passⱼ* (respectivement *PASSⱼ*) pour i différent de j.

La figure 2 représente un détail des échanges entre l'utilisateur 2 et l'entité de certification 1 tels que référencés 10 et 20 dans la figure 1.

L'utilisateur 2 connaît initialement son identifiant *login,* la clé publique de l'entité de certification *vkₐ* et la fonction unidirectionnelle H utilisée pour réalisée les dérivées. L'autorité de certification 1 connaît quant à elle initialement sa clé publique *vkₐ*, sa clé privée *skₐ* et la fonction unidirectionnelle H utilisée pour réalisée les dérivées.

L'utilisateur 2 transmet 100 son identifiant login à l'entité de certification. Celle-ci génère en retour un secret sec dans une étape 102. Elle transmet alors 101 ce secret à l'utilisateur 2. Selon un mode de réalisation de l'invention, l'utilisateur est apte à calculer les mots de reconnaissance ackᵢ et les mots de passe passᵢ tels que précédemment définis dans des étapes 103 et 104. L'entité de certification calcule également ces variables dans des étapes 105 et 106. Elle calcule également des mots de vérification *PASSᵢ* dans une étape 107, les certifie et les transmet 108 à l'entité de validation

Ainsi, les mots de vérification étant certifiés, on peut également vérifier la validité des autres mots par application d'une fonction unidirectionnelle. La validité des mots de passe passᵢ est donc vérifiée en testant si l'on a bien *H(passᵢ)* = *PASSᵢ*, et la validité des mots de reconnaissance est vérifiée en testant si l'on a bien H² *(ackᵢ)* = *H(passᵢ)* = *PASSᵢ.*

Le paramètre k tel que défini précédemment est ici un paramètre de sécurité qui désigne le nombre maximum de tentatives de connexions infructueuses, pour des raisons de panne matérielle ou de réseau ou bien pour des tentatives malhonnêtes de la part d'un utilisateur 2. Selon les contextes de mise en oeuvre de la présente invention, le paramètre k peut par exemple prendre des valeurs comprises entre quelques unités et plusieurs dizaines.

De la sorte, suite à cette certification, l'utilisateur est au moins en possession des variables suivantes : sec, passᵢ, ackᵢ. L'entité de validation est quant à elle au moins en possession des mots de vérification *PASSᵢ*. En particulier, elle ne possède pas les mots *sec, passᵢ, ackᵢ*, qui sont propres à l'utilisateur.

On décrit maintenant un exemple de procédé de certification entre l'utilisateur 2 et l'entité de vérification 3 en référence à la figure 3.

L'utilisateur 2 génère 109, par exemple à l'aide d'un algorithme G situé sur son calculateur, un couple de clés de signature (*sk, vk*) et souhaite un certificat sur *vk.* Il transmet *vk* à l'entité de validation ainsi que son login dans une étape 110.

De son côté, l'entité de validation gère un identifiant numérique de comptage, ou compteur c de tentatives de connexion par l'utilisateur. Ce compteur c représente donc le nombre de fois que l'utilisateur 2, identifié par son login, a tenté de se connecter au service de certification par l'entité de validation. L'entité de certification transmet 111 la valeur courante du compteur c à l'utilisateur à réception de son identifiant login et de la clé publique vk de l'utilisateur.

L'utilisateur prouve alors qu'il connaît la clé de signature sk associée à la clé *vk* à certifier, ainsi que le dérivé du secret sec en produisant 112 une signature sur le mot de passe d'indice c égal à la valeur courante reçu du compteur σ=*Sₛₖ(pass_{c})*.

On décrit maintenant le procédé de certification permettant d'obtenir un certificat de l'entité de validation. Il est toutefois entendu que si les valeurs fournies par l'utilisateur, notées de façon générale *TEST*, ne correspondent pas à la bonne mise en oeuvre du procédé, la certification sera refusée. On se place donc ici dans l'hypothèse où la valeur transmise à l'entité de validation à l'étape 112 correspond bien à une valeur *TEST* correcte.

Le prestataire vérifie alors la signature de l'utilisateur grâce à sa clé publique qu'il a reçue précédemment et teste donc *Vvk(pass_{c}; σ)*. Il vérifie également 113 le mot de passe *pass_{c}* en testant *PASS_{c}=H(pass_{c}).* Il incrémente également le compteur c dans l'étape 114.

Une fois ces données vérifiées, le prestataire est donc assuré que le mot de passe *pass_{c}* est bien associé à l'identifiant de l'utilisateur *login,* et que la clé publique est bien associée à l'identifiant de l'utilisateur *login.* Le prestataire signe alors 115 le quadruplet *(login, c, passe_{c}, vk)* à l'aide de sa clé privée *skₚ* et transmet 116 cette signature *σₚ*=*Sₛₖₚ(login, c, pass_{c}, vk)* à l'utilisateur.

Elle transmet également à l'utilisateur dans l'étape 116, le certificat reçu de l'entité de certification σₐ^{c} sur le mot de vérification *PASS_{c}*. Le mot de vérification transmis est donc le mot de vérification dont l'indice correspond au compteur de tentatives de connexions par l'utilisateur 2 tel qu'il a été transmis à l'utilisateur dans l'étape 111.

L'utilisateur vérifie alors la validité de σₚ par *Vvkₚ (σₚ ; (login, c*, *pass_{c}, vk)), vkₚ* étant la clé publique du prestataire, et génère 117 un certificat sous la forme d'un n-uplet *cert* = *(login, c, ack_{c}, σₐ^{c}, vk, σₚ).*

Selon l'invention, on note que ce certificat est vérifiable par tous grâce aux fonctions de vérification suivantes :
*Vvkₚ(login, c, H(ack_{c}), vk ; σₚ*) pour vérifier *login, c*, *ack_{c}* et *vk ;*
*Vvkₐ (login, PASS_{c} ; σₐ^{c})* pour vérifier login et *PASS_{c} ;*
*H²(ack_{c})* pour vérifier *ack_{c}* à l'aide de *PASS_{c}.*

C'est ce certificat vérifiable par tous qui est transmis à l'entité de transaction 4 dans une étape 118. Ce certificat garantit alors que la clé publique *vk* est bien associée à l'utilisateur 2 identifié par son login.

Le procédé selon l'invention permet de fournir un fort niveau de sécurité. En effet, seul l'utilisateur peut obtenir un certificat cert en son nom puisqu'un tel certificat intègre une valeur inconnue du prestataire (*ack_{c}*) avant que l'utilisateur n'ait utilisé son certificat avec l'index c. Sans cela, le *prestataire* pourrait tirer partie des informations apprises au cours de la certification.

De plus, la valeur *ack_{c}* étant nécessaire pour valider le certificat. Cette information n'est révélée qu'une fois que l'utilisateur a reçu une signature σₚ valide, lors de l'utilisation du certificat *cert.* Une deuxième signature σₚ' avec la même valeur de compteur accuse alors le prestataire. On note que pour cela, l'utilisateur doit conserver une copie de son certificat.

Par ailleurs, si l'utilisateur cherche à faire accuser le prestataire, ou si une panne réseau bloque des communications, le prestataire incrémente le compteur et ne peut donc pas être mis en cause tant que, jamais, deux signatures σₚ ne seront émises avec le même compteur.

On décrit maintenant la taille des variables utilisées dans le cadre de la présente invention afin de garantir un niveau de sécurité suffisant.

En choisissant un secret sec de 60 bits, et une fonction de hachage unidirectionnelle de type SHA-1, une recherche exhaustive pour retrouver le secret sec à partir des valeurs des mots de vérification *PASSᵢ* nécessite en moyenne 2⁶⁰ évaluations de SHA-1. Le temps nécessaire pour réaliser ces évaluations fournit une sécurité suffisante dans le cadre de la présente invention.

Un tel secret sec sur 60 bits peut alors se coder sur 12 caractères alphanumériques. Ainsi, selon l'invention, seul ce secret court de 12 caractères peut être transmis de façon confidentielle à l'utilisateur, et conservé en lieu sûr par celui-ci.

Il est entendu que dans la gestion des objets à signer, stocker et/ou transmettre, des empreintes de ces objets sont parfois suffisantes. De façon connue en soi, de telles empreintes sont des versions compressées de l'objet total, de telle manière qu'il soit calculatoirement impossible de trouver deux objets avec la même empreinte.

Par ailleurs, comme pour toute infrastructure de gestion de clés, la certification peut être associée à la révocation. En effet, en cas de perte ou de corruption de la clé secrète par l'utilisateur (ou du secret sec), il est nécessaire de ne plus considérer les clés publiques associées comme appartenant à leur propriétaire légitime. Il suffit pour cela de maintenir une liste de révocation, répertoriant les certificats, ou les clés publiques, qui ne doivent plus être considérées authentiques. Néanmoins, la révocation nécessite une authentification forte de celui qui en fait la demande, et l'on ne peut plus lui faire utiliser sa clé secrète, puisque c'est éventuellement parce qu'il l'a perdue qu'il fait la demande de révocation. Il est donc d'usage de préparer des questions convenues avec l'utilisateur (nom de jeune fille de sa mère, nom de son animal de compagnie, etc).

Mais encore une fois, on ne désire pas faire confiance au prestataire qui pourrait souhaiter révoquer un utilisateur à son insu.

On va donc demander à l'utilisateur de signer ses réponses, préalablement chiffrées avec la clé publique de l'autorité de certification pour les rendre inaccessibles au prestataire. Lors d'une demande de révocation, l'utilisateur contacte le prestataire et joint une ou des réponses aux questions. Le prestataire transmet la demande à l'autorité de certification qui lui donne alors l'autorisation, ou non, de procéder à la révocation en ajoutant le certificat, ou la clé publique, à une liste de révocation.

On décrit maintenant des variantes de la présente invention telle que décrite en détail ci-dessus dans un mode particulier de réalisation.

Dans le mode de réalisation tel que décrit ci-dessus, l'entité de certification transmet un secret unique sec à l'utilisateur et ce dernier calcule les mots de passe *passᵢ* et les mots de reconnaissance ackᵢ. Selon une variante, il est également possible que l'entité de certification transmette directement à l'utilisateur les mots de passe ackᵢ et/ou les mots de passe passᵢ. Dans ce cas, les étapes 103 et 104 de calcul des valeurs ackᵢ et passᵢ peuvent être remplacées par des étapes de transmission de ces mêmes valeurs de l'entité de certification à l'utilisateur. En tout état de cause, il est important selon la présente invention, que l'utilisateur soit en possession d'une donnée, qui peut être le secret sec, les mots de passe passᵢ, ou les mots de reconnaissance ackᵢ, qu'il partage seulement avec l'autorité de certification, et qui est inconnue du prestataire, mais vérifiable par lui.

Dans une autre variante de l'invention, si l'on ne fait pas entièrement confiance à l'entité de certification, il est possible que l'utilisateur et le prestataire échangent un second mot de passe noté pw, inconnu de l'entité de certification. Ce mot de passe est alors transmis de l'utilisateur vers le prestataire lorsque l'utilisateur souhaite faire certifier sa clé publique. Si ce second mot de passe n'est pas reconnu par l'entité de validation, aucune vérification n'est réalisée, et le procédé est stoppé. Ceci possède l'avantage d'éviter que l'entité de certification n'agisse au nom de l'utilisateur.

## Revendications

1. Procédé pour la gestion d'une clé publique d'un utilisateur (2), ledit utilisateur (2) possédant un identifiant unique *(login),* **caractérisé en ce qu'**il comprend :
o une étape de certification consistant à :
- générer (102, 105, 106) au niveau d'une entité de certification (1) au moins un mot de passe (*passᵢ*) ;
- transmettre (101) de ladite autorité de certification (1) audit utilisateur (2), au moins une donnée secrète (*sec, ackᵢ, passᵢ*) associée audit au moins un mot de passe ;
- déduire (103, 104) au niveau dudit utilisateur (2), ledit au moins un mot de passe (*passᵢ*), de ladite au moins une données secrète (sec, *ackᵢ, passᵢ) ;*
- générer (107), au niveau de ladite entité de certification (1), à partir dudit au moins un mot de passe (*passᵢ*), au moins un mot de passe dérivé (*PASSᵢ*), ledit au moins un mot de passe dérivé (*PASSᵢ*) dérivant de façon unidirectionnelle dudit au moins un mot de passe (*passᵢ*) par une fonction unidirectionnelle (H);
o une étape d'échange consistant à :
- transmettre (108) de ladite entité de certification (1), vers une entité de validation (3), au moins un certificat de ladite entité de certification (σ*ₐⁱ*) associé audit identifiant unique *(login)* dudit utilisateur (2) et audit moins un mot de passe dérivé (*PASSᵢ*);
o une étape de demande de validation consistant à :
- générer (109), au niveau dudit utilisateur (2), une clé secrète (*sk*) associée à une clé publique (*vk*);
- transmettre (110), dudit utilisateur (2) vers ladite entité de validation (3), ladite clé publique (*vk*) et ledit identifiant unique (*login*);
- transmettre (112), dudit utilisateur (2) vers ladite entité de validation (3), une valeur de test (*TEST*=*pass_{c}*);
o une étape de validation consistant à :
- En cas de correspondance (113) au niveau de ladite entité de validation (3), entre une dérivée de ladite valeur de test par ladite fonction unidirectionnelle (*H(TEST)*) et un mot de passe dérivé validé (PASS_{c}) parmi ledit au moins un mot de passe dérivé, transmettre (116) audit utilisateur (2) un certificat de validation de l'entité de validation (σₚ) associé au moins audit identifiant dudit utilisateur (*login*) et à ladite clé publique (*vk*).

2. Procédé selon la revendication 1, dans lequel ladite étape de certification comprend en outre une étape consistant à :
- déduire (103) au niveau dudit utilisateur (2), au moins un mot de reconnaissance de ladite au moins une donnée secrète *(sec, ackᵢ),* chacun desdits au moins un mot de passe (*passᵢ*=*H(ackᵢ)*) dérivant de façon unidirectionnelle de chacun desdits au moins un mot de reconnaissance (*passᵢ*=*H(ackᵢ)*) ;
et ledit procédé comprend également :
o une étape de transaction certifiée vers une entité de transaction (4), comprenant des étapes consistant à :
- transmettre (118) dudit utilisateur (2) vers ladite entité de transaction (4), un certificat de transaction *(cert)* comprenant au moins ledit certificat de validation et un desdits au moins un mot de reconnaissance.

3. Procédé selon la revendication 2, dans lequel chacun desdits au moins un mot de reconnaissance (*ackᵢ*) est associé à un index (*i*) unique, chacun desdits au moins un mot de passe (*passᵢ*=*H(ackᵢ)*) décrivant de façon unidirectionnelle de chacun desdits au moins un mot de reconnaissance (*ackᵢ*) et étant associé à l'index dudit mot de reconnaissance dont il dérive (*i*);
o ladite étape de demande de validation comprend, suite à la transmission (110) dudit utilisateur (2) vers ladite entité de validation (3) de ladite clé publique (vk), une étape consistant à :
- stocker dans des moyens de stockage, au niveau de ladite entité de validation (3) un identifiant numérique de comptage (c);
- transmettre (111) de ladite entité de validation (3) vers ledit utilisateur (2), ledit identifiant numérique de comptage (c);
o ladite étape de validation consistant à :
- En cas de correspondance (113) au niveau de ladite entité de validation (3), entre la dérivée de ladite valeur de test par ladite fonction unidirectionnelle *(H(TEST))* et un mot de passe dérivé validé (*PASS_{c}*) dont l'index (c) correspond audit identifiant numérique de comptage parmi ledit au moins un mot de passe dérivé, transmettre (116) audit utilisateur (2) un certificat de validation de l'entité de validation (σₚ) associé au moins audit identifiant dudit utilisateur (*login*), à ladite clé publique *(vk),* audit mot de passe dérivé validé, et audit identifiant numérique de comptage (*c*) ;
- Modifier (114) ledit identifiant numérique de comptage (c) dans lesdits moyens de stockage de ladite entité de validation (3) ;
o ladite étape de transaction certifiée vers une entité de transaction, comprenant des étapes consistant à :
- transmettre (118) dudit utilisateur (2) vers ladite entité de transaction (4), un certificat de transaction *(cert)* comprenant au moins ledit certificat de validation, ledit mot de reconnaissance (*ack_{c}*) dont l'index (*c*) est celui dudit mot de passe dérivé validé (*PASS_{c}*), et l'index dudit mot de reconnaissance (*c*).

4. Procédé selon l'une des revendications 1 à 3, dans lequel ladite au moins une donnée secrète correspond à un secret (*sec*)*,* chacun desdits au moins un mot de passe (*passᵢ*) dérivant de façon unidirectionnelle dudit secret (*passᵢ=H[H(sec, login, i)])*

5. Procédé selon la revendication 4, comprenant ladite étape de certification comprend des étapes consistant à :
- transmettre (101) de ladite autorité de certification (1) audit utilisateur (2), ledit secret (sec);
- calculer (103), au niveau dudit utilisateur, au moins un mot de reconnaissance *(ackᵢ),* chacun desdits au moins un mot de reconnaissance dérivant de façon unidirectionnelle dudit secret (*ackᵢ* =*H(sec, login, i))* ;
- calculer (104), au niveau dudit utilisateur, ledit au moins un mot de passe, chacun desdits au moins un mot de passe dérivant de façon unidirectionnelle de chacun desdits au moins un mot de reconnaissance.

6. Procédé selon la revendication 4, comprenant ladite étape de certification comprend des étapes consistant à :
- transmettre (101) de ladite autorité de certification (1) audit utilisateur (2), ledit secret (sec);
- calculer (103), au niveau dudit utilisateur, au moins un mot de reconnaissance (*ackᵢ*), chacun desdits au moins un mot de reconnaissance *(ackᵢ)* étant associé à un index (*i*) unique dérivant de façon unidirectionnelle dudit secret (*ackᵢ* =*H(sec, login, i))* ;
- calculer (104), au niveau dudit utilisateur, ledit au moins un mot de passe, chacun desdits au moins un mot de passe dérivant de façon unidirectionnelle de chacun desdits au moins un mot de reconnaissance et étant associé audit index (*i*) dudit mot de reconnaissance dont il dérive
o ladite étape de demande de validation comprend, suite à la transmission (110) dudite utilisateur (2) vers ladite entité de validation (3) de ladite clé publique (vk), une étape consistant à :
- stocker dans des moyens de stockage, au niveau de ladite entité de validation (3) un identifiant numérique de comptage (c);
- transmettre (111) de ladite entité de validation (3) vers ledit utilisateur (2), ledit identifiant numérique de comptage (c);
o ladite étape de validation consistant à :
- En cas de correspondance (113) au niveau de ladite entité de validation (3), entre la dérivée de ladite valeur de test par ladite fonction unidirectionnelle *(H(TEST))* et un mot de passe dérivé validé (*PASS_{c}*) dont l'index (c) correspond audit identifiant numérique de comptage parmi ledit au moins un mot de passe dérivé, transmettre (116) audit utilisateur (2) un certificat de validation de l'entité de validation (σₚ) associé au moins audit identifiant dudit utilisateur (*login*), à ladite clé publique (*vk*), audit mot de passe dérivé validé, et audit identifiant numérique de comptage (c) ;
- Modifier (114) ledit identifiant numérique de comptage (*c*) dans lesdits moyens de stockage de ladite entité de validation (3) ;
o ladite étape de transaction certifiée vers une entité de transaction, comprenant des étapes consistant à :
- transmettre (118) dudit utilisateur (2) vers ladite entité de transaction (4), un certificat de transaction (*cert*) comprenant au moins ledit certificat de validation, ledit mot de reconnaissance (*ack_{c}*) dont l'index (*c*) est celui dudit mot de passe dérivé validé (*PASS_{c}*), et l'index dudit mot de reconnaissance (*c*).

7. Procédé selon l'une quelconque des revendications précédentes, dans lequel ladite étape de demande de validation comprend une première sous-étape de transmission de ladite entité de validation (3) vers ledit utilisateur (2), d'un second mot de passe (*pw*); et une seconde sous-étape de transmission dudit utilisateur (2) vers ladite entité de validation (3) d'une seconde valeur de test, ladite étape de validation n'étant réalisée qu'en cas de correspondance entre ledit second mot de passe (*pw*) et ladite seconde valeur de test.

## Claims

1. A process for managing a user's public key (2), said user (2) possessing a unique identification (*login*), **characterised in that** is comprises:
o a certification stage comprising:
- the generation (102, 105, 106) of at least one password (*passᵢ*) at a certificate authority (1);
- the transmission (101) of at least one item of secret data (*sec, ackᵢ, passᵢ*), associated with said at least one password from said certificate authority (1), to said user (2);
- the establishment (103, 104) at the level of said user (2), of said at least one password (*passᵢ*) of said at least one item of secret data (*sec, ackᵢ, pass_{¡}*);
- the generation (107), at said certificate authority (1), from said at least one password (*passᵢ*), of at least one derived password (*PASSᵢ*), said at least one derived password (*PASSᵢ*) deriving in a one-way manner from said at least one password (*passᵢ*) by a one-way function (H);
o an exchange stage comprising:
- the transmission (108) from said certificate authority (1), to a validation authority (3), of at least one certificate of said certificate authority (σₐ*ⁱ*) associated with said unique identification *(login)* of said user (2) and with at least one derived password (*PASSᵢ*);
o a validation request stage comprising:
- the generation (109), at the level of said user (2), of a secret key (*sk*) associated with a public key (vk);
- the transmission (110) of said public key (vk) and said unique identification *(login)* from said user (2) to said validation authority (3);
- the transmission (112) of a test value *(TEST=pass_{c})* from said user (2) to said validation authority (3);
o a validation stage comprising:
- in case of correspondence (113) at said validation authority (3) between a derivative of said test value by said one-way function (*H(TEST)*) and a validated derived password (PASS_{c}) among said at least one derived password, the transmission (116) to said user (2) of a validation certificate from the validation authority (σₚ) associated with at least said identification of said user (*login*) *and* with said public key *(vk).*

2. The process according to claim 1, wherein said certification stage includes an additional stage comprising:
- the establishment (103), at the level of said user (2), of at least one identification word of said at least one item of secret data *(sec, ackᵢ),* each of said at least one password (*passᵢ*=*H(ackᵢ)*) deriving in a one-way manner from each of said at least one identification word (*passᵢ*=*H(ackᵢ)*);
and said process also includes:
o a stage of certified transaction to a transaction authority (4), including stages comprising:
- the transmission (118) from said user (2) to said transaction authority (4) of a transaction certificate *(cert)* including at least said validation certificate and one of said at least one identification word.

3. The process according to claim 2, wherein each of said at least one identification word (*ackᵢ*) is associated with a unique index (i), each of said at least one password (*passᵢ*=*H(ackᵢ)*) deriving in a one-way manner from each of said at least one identification word (*ackᵢ*) and being associated with the index of said identification word that it derives from (*i*);
o following transmission (110) of said public key (vk) from said user (2) to said validation authority (3), said validation request stage includes a stage comprising:
- storage in storage media, at said validation authority (3) of a digital count identifier (c);
- the transmission (111) of said digital count identifier (c) from said validation authority (3) to said user (2);
o said validation stage comprising:
- in case of correspondence (113) at said validation authority (3) between the derivative of said test value by said one-way function (*H(TEST)*) and a validated derived password (PASS_{c}) the index (c) of which corresponds to said digital count identifier among said at least one derived password, transmission (116) to said user (2) of a validation certificate from the validation authority (σₚ) associated with at least said identification of said user *(login),* to said public key *(vk),* to said validated derived password and to said digital count identifier(c);
- Modification (114) of said digital count identifier (*c*) in said storage media of said validation authority (3);
o said stage of certified transaction to a transaction authority, including stages comprising:
- the transmission (118) from said user (2) to said transaction authority (4) of a transaction certificate *(cert)* including at least said validation certificate, said identification word *(ack_{c}),* the index of which (*c*) is that of said validated derived password (PASS_{c}), and the index of said identification word (*c*).

4. The process according to claims 1 to 3 wherein said at least one item of secret data corresponds to a secret (*sec*), each of said at least one password (*passᵢ*) deriving in a one-way manner from said secret (*passᵢ* = *H[H(sec, login, i)]*).

5. The process according to claim 4, wherein said certification stage includes stages comprising:
- the transmission (101) of said secret (*sec*) from said certificate authority (1) to said user (2);
- the calculation (103), at the level of said user, of at least one identification word (*ackᵢ*), each said at least one identification word deriving in a one-way manner from said secret (*ack_{¡}* = *H(sec, login, i)*);
- the calculation (104), at the level of said user, of said at least one password, each of said at least one password deriving in a one-way manner from each of said at least one identification word.

6. The process according to claim 4, wherein said certification stage includes stages comprising:
- the transmission (101) of said secret (*sec*) from said certificate authority (1) to said user (2);
- the calculation (103), at the level of said user, of at least one identification word (*ackᵢ*), each of said at least one identification word (*ackᵢ*) being associated with a unique index (*i*) deriving in a one-way manner from said secret (*ackᵢ*=*H(sec, login, i)*);
- the calculation (104), at the level of said user, of said at least one password, each of said at least one password deriving in a one-way manner from each of said at least one identification word and being associated with said index (*i*) of said identification word that it derives from
o following transmission (110) of said public key (vk) from said user (2) to said validation authority (3), said validation request stage includes a stage comprising:
- storage in storage media, at said validation authority (3) of a digital count identifier (*c*);
- the transmission (111) of said digital count identifier (*c*) from said validation authority (3) to said user (2);
o said validation stage comprising:
- in case of correspondence (113) at said validation authority (3) between the derivative of said test value by said one-way function (*H(TEST)*) and a validated derived password (PASS_{c}), the index (c) of which corresponds to said digital count identifier among said at least one derived password, transmission (116) to said user (2) of a validation certificate from the validation authority (σₚ) associated with at least said identification of said user (*login*), to said public key (vk), to said validated derived password and to said digital count identifier (c);
- Modification (114) of said digital count identifier (*c*) in said storage media of said validation authority (3);
o said stage of certified transaction to a transaction authority, including stages comprising:
- the transmission (118) from said user (2) to said transaction authority (4) of a transaction certificate (*cert*) including at least said validation certificate, said identification word *(ack_{c})* the index of which (*c*) is that of said validated derived password (PASS_{c}), and the index of said identification word (*c*).

7. The process according to any of the previous claims wherein said validation request stage includes a first sub-stage of transmission from said validation authority (3) to said user (2), of a second password (pw) and a second sub-stage of transmission from said user (2) to said validation authority (3) of a second test value, said validation stage being performed only in case of correspondence between said second password (*p*w) and said second test value.

## Patentansprüche

1. Verfahren zum Steuern eines öffentlichen Schlüssels eines Teilnehmers (2), wobei der Teilnehmer (2) ein persönliches Identifikationszeichen (login) besitzt, **dadurch gekennzeichnet, dass** dieses umfasst:
o einen Zertifikationsschritt bestehend aus:
- Erzeugen (102, 105, 106) an einer Zertifikationseinheit (1) wenigstens eines Passworts (passi):
- Übertragen (101) von der Zertifikationsautorität (1) an den Teilnehmer (2) wenigstens eines Geheimzeichens (sec, acki, passi), dass wenigstens einem Passwort zugeordnet ist;
- Ableiten (103, 104) beim Teilnehmer (2) des wenigstens eines Passwort (passi) von dem wenigstens einen Geheimzeichen (sec, acki, passi);
- Erzeugen (107) an der Zertifikationseinheit (1) aus dem wenigstens einen Passwort (passi) wenigstens ein abgeleitetes Passwort (PASSi), wobei das wenigstens eine abgeleitete Passwort (PASSi) in unidirektionaler Weise von wenigstens einem Passwort (passi) durch eine unidirektionale Funktion (H) abgeleitet wird;
o einen Austauschschritt bestehend aus:
- Übertragen (108) von der Zertifikationseinheit (1) in Richtung einer Validierungseinheit (3) wenigstens eines Zertifikats der Zertifikationseinheit (σₛ¹), die dem persönlichen Identifikationszeichen (login) des Teilnehmers (2) und dem wenigstens einen abgeleiteten Passwort (PASSi) zugeordnet ist;
o einen Validierung- Abfrageschritt, bestehend aus:
- Erzeugen (109) beim Teilnehmer (2) eines Geheimschlüssels (sk), der einem öffentlichen Schlüssel (vk) zugeordnet ist;
- Übertragen (110) vom Teilnehmer (2) in Richtung der Validierungseinheit (3) des öffentlichen Schlüssels (vk) und des persönlichen Identifikationszeichens (login);
- Übertragen (112) vom Teilnehmer (2) in Richtung der Validierungseinheit (3) einen Testwert (TEST=passc);
o einen Validierungsschritt bestehend aus:
- im Falle einer Entsprechung (113) an der Validierungseinheit (3) zwischen einer Ableitung des Testwertes durch die unidirektionale Funktion (H(TEST) und einem validierten abgeleiteten Passwort (PASSc) aus dem wenigstens einen abgeleiteten Passwort, Übertragen (116) an den Teilnehmer (2) ein Validierungszertifikat der Validierungseinheit (σp), der wenigstens dem Identifikationszeichen des Teilnehmers (login) und dem öffentlichen Schlüssel (vk) zugeordnet ist.

2. Verfahren nach Anspruch 1, in welchem der Zertifikationsschritt ferner einen Schritt umfasst, bestehend aus:
- Ableiten (103) beim Teilnehmer (2) wenigstens eines Wiedererkennungswortes des wenigstens einen Geheimzeichens (sec, acki), wobei jedes des wenigstens einen Passworts (passi=H(acki) in unidirektionaler Weise von jedem des wenigstens einen Wiedererkennungswortes (passi=H(acki) abgeleitet wird;
- und das Verfahren auch umfasst:
o einen Schritt zur zertifizierten Transaktion in Richtung einer Transaktionseinheit (4) mit den Schritten, bestehend aus:
- Übertragen (118) vom Teilnehmer (2) in Richtung der Transaktionseinheit (4) eines Transaktionszertifikats (cert), das wenigstens das Validierungszertifikat und eines des wenigstens einen Wiedererkennungswortes umfasst.

3. Verfahren nach Anspruch 2, in welchem jedes des wenigstens einen Wiedererkennungswortes (acki) einem einzigartigen Index (i) zugeordnet ist, wobei jedes des wenigstens einen Passworts (passi=H(acki) in unidirektionaler Weise von jedem des wenigstens einen Wiedererkennungswortes (acki) abgeleitet wird und dem Index des Wiedererkennungswortes, von welchem dieses abgeleitet ist (i), zugeordnet ist;
o wobei der Validierungs-Abfrageschritt umfasst, nach der Transmission (110) vom Teilnehmer (2) in Richtung der Validierungseinheit (3) des öffentlichen Schlüssels (vk), einen Schritt, bestehend aus:
- Speichern in einer Speichereinrichtung an der Validierungseinheit (3) eines numerischen Zähler- Identifikationszeichens (c);
- Übertragen (111) von der Validierungseinheit (3) in Richtung des Teilnehmers (2) des numerischen Zähler- Identifikationszeichens (c);
o wobei der Validierungsschritt darin besteht:
- im Fall einer Entsprechung (113) an der Validierungseinheit (3) zwischen der Ableitung des Testwertes durch die unidirektionale Funktion (H(TEST) und eines validierten, abgeleiteten Passworts (PASSc), dessen Index (c) mit dem nummerischen Zähler- Identifikationszeichen aus dem wenigstens einen abgeleiteten Passwort korrespondiert, übertragen (116) an den Teilnehmer (2) eines Validierungszertifikats der Validierungseinheit (σp), die wenigstens dem Identifikationszeichen des Teilnehmers (login), dem öffentlichen Schlüssel (vk), dem validierten abgeleiteten Passwort und dem nummerischen Zähler- Identifikationszeichen (c) zugeordnet ist;
- Modifizieren (114) des nummerischen Zahler- Identifikationszeichens (c) in der Speichereinrichtung der Validierungseinheit (3);
o wobei der Schritt der zertifizierten Transaktion in Richtung einer Transaktionseinheit Schritte umfasst, die darin bestehen:
- Übertragen (118) vom Teilnehmer (2) in Richtung der Transaktionseinheit (4) eines Transaktionszertifikats (cert), das wenigstens das Validierungszertifikat umfasst, das Wiedererkennungswort (ackc), dessen Index (c) derjenige des validierten abgeleiteten Passworts (PASSc) ist, und den Index des Wiedererkennungswortes (c).

4. Verfahren nach einem der Ansprüche 1 bis 3, in welchem das wenigstens eine Geheimzeichen mit einem Geheimnis (sec) korrespondiert, wobei jedes des wenigstens einen Passworts (passi), in unidirektionaler Weise von dem Geheimnis (passi=H[H(sec, login, i)]) abgeleitet wird.

5. Verfahren nach Anspruch 4, mit dem Zertifikationsschritt umfassend Schritte, die darin bestehen:
- Übertragen (101 von der Zertifikationsautorität (1) an den Teilnehmer (2) das Geheimnis (sec);
- Berechnen (103) beim Teilnehmer wenigstens eines Wiedererkennungswortes (acki), wobei jedes des wenigstens einen Wiedererkennungswortes in unidirektionaler Weise von dem Geheimnis abgeleitet wird (acki= H(sec, login, i));
- Berechnen (104) beim Teilnehmer dass wenigstens eine Passwort, wobei jedes des wenigstens einen Passwortes, in unidirektionaler Weise von jedem des wenigstens einen Wiedererkennungswortes abgeleitet wird.

6. Verfahren nach Anspruch 4, mit dem Zertifikationsschritt umfassen Schritte, die darin bestehen:
- Übertragen (101) von der Zertifikationsautorität (1) an den Teilnehmer (2) das Geheimnis (sec);
- Berechnen (103) beim Teilnehmer wenigstens eines Wiedererkennungswortes (acki), wobei jedes des wenigstens einen Wiedererkennungswortes (acki) einem einzigartigen Index (i) zugeordnet ist, der in unidirektionaler Weise von dem Geheimnis (acki = H(sec, login, i)) abgeleitet wird;
- Berechnen (104) beim Teilnehmer des wenigstens einen Passwortes, wobei jedes des wenigstens einen Passwortes in unidirektionaler Weise von jedem des wenigstens einen Wiedererkennungswortes abgeleitet wird und dem Index (i) des Wiedererkennungswortes, von dem dieses abgeleitet ist, zugeordnet wird
o wobei der Validierungs- Abfrageschritt umfasst, nach der Übertragung (110) vom Teilnehmer (2) in Richtung der Validierungseinheit (3) des öffentlichen Schlüssels (vk) einen Schritt, bestehend aus:
- Speichern in einer Speichereinrichtung bei der Validierungseinheit (3) eines nummerischen Zähler- Identifikationszeichens (c);
- Übertragen (111) von der Validierungseinheit (3) in Richtung des Teilnehmers (2) des nummerischen Zähler- Identifikationszeichens (c);
o wobei der Validierungsschritt darin besteht:
- im Falle einer Entsprechung (113) bei der Validierungseinheit (3) zwischen der Ableitung des Testwertes durch die unidirektionale Funktion (H(TEST) und eines validierten abgeleiteten Passworts (PASSc), dessen Index (c) mit dem nummerischen Zähler- Identifikationszeichen aus dem wenigstens einen abgeleiteten Passwort korrespondiert, übertragen (116) an den Teilnehmer (2) eines Validierungszertifikats der Validierungseinheit (σp), dem wenigstens das Identifikationszeichen des Teilnehmers (login), der öffentliche Schlüssels (vk), das validierte, abgeleitete Passwort und das nummerische Zähler- Identifikationszeichen (c) zugeordnet ist;
- Modifizieren (114) des nummerischen Zähler- Identifikationszeichens (c) in der Speichereinrichtung der Validierungseinheit (3);
o wobei der Schritt der zertifizierten Transaktion in Richtung einer Transaktionseinheit Schritte umfasst, die darin bestehen:
- Übertragen (118) vom Teilnehmer (2) in Richtung der Transaktionseinheit (4) eines Transaktionszertifikats (cert) mit wenigstens dem Validierungszertifikat, des Wiedererkennungswortes (ackc), dessen Index (c) derjenige des validierten, abgeleiteten Passworts (PASSc) ist und des Index des Wiedererkennungswortes (c).

7. Verfahren nach einem der vorhergehenden Ansprüche, in welchem der Validierung- Abfrageschritt einen ersten Unterschritt zur Übertragung von der Validierungseinheit (3) an den Teilnehmer (2) eines zweiten Passworts (pw) und einen zweiten Unterschritt zur Übertragung von dem Teilnehmer (2) in Richtung der Validierungseinheit (3) eines zweiten Testwertes umfasst, wobei der Validierungsschritt nur im Falle einer Entsprechung zwischen dem zweiten Passwort (pw) und dem zweiten Testwert durchgeführt wird.
